# EUROPÄISCHE PATENTSCHRIFT

(11) **EP 2 136 615 B1**
(45) Veröffentlichungstag und Bekanntmachung des Hinweises auf die Patenterteilung: **21.09.2011**
(21) Anmeldenummer: 08715524.8
(22) Anmeldetag: 29.02.2008
(51) Int. Cl.: A01G 13/02

(54) **Vorrichtung zum Verhindern eines Unkrautwachstums und Verfahren zum Herstellen einer Unkrautwachstumssperre**
Device for preventing weed growth and method for producing a weed block
Dispositif destiné à empêcher le développement de mauvaises herbes et procédé de fabrication d'un dispositif anti-mauvaises herbes

(30) Priorität: 20.03.2007 DE 102007013870; 30.03.2007 DE 102007015760
(43) Veröffentlichungstag der Anmeldung: 30.12.2009
(73) Patentinhaber: Artmeyer, Norbert, 48477 Hörstel-Riesenbeck (DE)
(72) Erfinder: Artmeyer, Norbert, 48477 Hörstel-Riesenbeck (DE)
(74) Vertreter: Castell, Klaus
(86) Internationale Anmeldenummer: PCT/DE2008/000361
(87) Internationale Veröffentlichungsnummer: WO 2008/113319

(56) Entgegenhaltungen:
- DE-A1- 3 823 580
- DE-A1- 3 922 058
- DE-U1-202006 000 435
- DE-U1-202006 006 171
- FR-A- 2 568 447
- NL-C1- 1 016 446
- US-A- 3 775 147
- US-A- 4 794 726
- US-A- 5 325 627

## Beschreibung

Die Erfindung betrifft einerseits eine Vorrichtung zum Verhindern eines Unkrautwachstums mit einem Grundkörper aus einem lichtundurchlässigen Kunststoffmaterial und mit Mitteln zum Positionieren insbesondere an einer Pflanze, wobei das lichtundurchlässige Material eine flüssigkeitsdurchlässige Struktur aufweist. Andererseits betrifft die Erfindung ein Verfahren zum Herstellen einer Unkrautwachstumssperre insbesondere an einer Pflanze, bei welchem in die Unkrautwachstumssperre Mittel zum Positionieren der Unkrautwachstumssperre eingebracht werden.

Um ein Wachstum von Unkraut, insbesondere um eine Primärpflanze, wie etwa eine Kulturpflanze, herum, welche beispielsweise als Containerpflanze in Baumschulen gezogen wird, zu verhindern, werden im Stand der Technik verschiedene Methoden angewendet.

Beispielsweise ist es gängige Praxis Erdballen von Kulturpflanzen, bevor sie verstandfertig verpackt werden, per Hand von Unkraut zu befreien. Dies ist jedoch sehr kostenintensiv und daher nur dort sinnvoll einsetzbar, wo Arbeitskräfte sehr günstig sind.

Darüber hinaus werden auch biologische oder chemische Pflanzenschutzmittel eingesetzt, mittels welchen zumindest ein prophylaktischer Pflanzenschutz erreicht werden kann. Diese Methode ist jedoch ebenfalls kostenintensiv, da zum einen die Pflanzenschutzmittel regelmäßig ausgebracht werden und da zum anderen Betriebsmittel, wie etwa Sprühmaschinen und/oder Sprühanlagen eingesetzt werden müssen, die neben Personalkosten zusätzliche Kosten verursachen. Darüber hinaus können chemische Pflanzenschutzmittel im Hinblick auf die Arbeitssicherheit bedenklich sein und erfordern zumindest eine zusätzliche Schutzausrüstung der Mitarbeiter. Außerdem belasten chemische Pflanzenschutzmittel das Erdreich und das Grundwasser. Chemische Pflanzenschutzmittel bedingen zudem Verträglichkeitsprobleme in Bezug auf die Primärpflanze, so dass die chemischen Pflanzenschutzmittel sogar eine sogenannte "Pflanzendepression" der Primärpflanze auslösen und hierdurch die Primärpflanze schädigen beziehungsweise vernichten können.

Eine weitere Möglichkeit sieht den Einsatz von Abdeckscheiben, insbesondere aus biologischem Material, vor, mittels welchen ein Bodenbereich um eine Primärpflanze herum abgedeckt wird. Derartige Abdeckscheiben werden häufig aus Papier, Pappe oder auch Kokosfasern, die mittels Kunststoffleim zusammengehalten werden, bereitgestellt.

Mit den bekannten Abdeckscheiben gelingt eine gute Abdeckung des Bodenbereiches um eine Primärpflanze herum und dadurch zumindest anfangs eine Verhinderung eines unerwünschten Wuchses von Sekundärpflanzen wie Unkräutern, welche die Entwicklung der Primärpflanze empfindlich stören können.

Jedoch sind die Abdeckscheiben oftmals auch nachteilig. Insbesondere sind Abdeckscheiben aus biologischem Material, wie zum Beispiel Papier, Pappe und/oder Kokos, nachteilig. Abdeckungen aus biologischem Material zersetzen sich aerob, es tritt demzufolge eine Humifizierung/Verwesung dieses Materials ein. Durch den Abbau durch Mikroorganismen werden Dünger, insbesondere Stickstoff, im Bodenbereich, im Wesentlichen auch um die Primärpflanze herum, vorwiegend für den Zersetzungsprozess festgesetzt. Diese für das Pflanzenwachstum wichtigen Stoffe stehen der Primärpflanze nicht mehr oder nur eingeschränkt zur Verfügung. Bedingt durch diesen Prozess entziehen Abdeckungen aus biologischem Material der zu schützenden Primärpflanze somit Nährstoffe, mit der Folge, dass das Wachstum der Primärpflanze negativ beeinträchtigt werden kann. Darüber hinaus hat der vorstehend beschriebene Zersetzungsprozess zur Folge, dass dieser wiederum zeitlich versetzt Zersetzungsprodukte freigibt, die ein neues Nährmedium für Sekundärpflanzen darstellen.

So werden Papier- und/oder Pappdeckel wegen ihres geringen Eigengewichts durch Windböen oftmals leicht vom Stamm einer Kulturpflanze gelöst. Auch bei einer künstlichen Bewässerung oder bei Regen werden Deckel aus Papier und/oder Pappe instabil und verändern ihre Form, so dass beispielsweise ein Erdballen einer Containerpflanze nicht mehr vollständig abgedeckt ist und Licht auf diesen treffen kann, wodurch wiederum ein Wachstum von Sekundärpflanzen begünstigt wird.

Deckel aus Papier und/oder Pappe zersetzen sich insbesondere bei großen Witterungsschwankungen besonders schnell und müssen aus diesem Grund auch häufig ersetzt werden. Darüber hinaus wird den Sekundärpflanzen, wie beispielsweise Unkräutern, mit biologischem Material, wie etwa Papier oder Pappe, ein Nährboden angeboten, der das Wachstum insbesondere von Unkräutern auf dem Deckel begünstigen kann.

Hinsichtlich der Verwendung von biologischem Material, wie zum Beispiel Papier und/oder Pappe und/oder Kokosfasern, besteht die Gefahr, dass produktionsbedingt Pflanzensamen, Pilzsporen oder Salze sowie andere anorganische oder organische Fremdstoffe in Abdeckscheiben enthalten sein können. Dies bedingt die Gefahr, dass durch Verunreinigungen, zum Beispiel durch Salze und/oder durch andere Nährstoffe, den zu bekämpfenden Sekundärpflanzen ein weiteres Nährmedium auf oder innerhalb der Abdeckung oder außerhalb dieser Abdeckung dadurch angeboten werden, dass die Fremdstoffe für die Primärpflanze nachteilig in das diese umgebende Erdreich eindringen können.

Hinsichtlich der Verwendung von biologisch abbaubarem Material, wie zum Beispiel Kokosfasern, besteht die Gefahr, dass produktionsbedingt Pflanzensamen, Pilzsporen oder Salze sowie andere sich nachteilig auswirkende Fremdstoffe in diesen Scheiben enthalten sein können. Dies kann meist nur durch eine kostenintensive chemische oder physikalisch thermische Behandlung, wie etwa eine radioaktive Bestrahlung oder eine Erhitzung, vollständig ausgeschlossen werden.

Darüber hinaus sind Scheiben aus biologischem Material herstellungsbedingt teilweise zusätzlich verleimt, wobei meist die untere Scheibenschicht eine gummierte Leimschicht umfasst, so dass hierdurch die Gefahr besteht, dass ein Erdballen einer Containerpflanze nicht hinreichend belüftet wird beziehungsweise nicht ausreichend abtrocknen kann.

Hinsichtlich Kunststofffolien besteht der Nachteil, dass diese nicht wasserdurchlässig sind, so dass eine Kulturpflanze nicht genügend oder nur sehr aufwändig mit Wasser und/oder Nähr- beziehungsweise Mineralstoffen versorgt werden kann. Darüber hinaus verspröden Kunststofffolien schnell und bekommen hierdurch derart Risse, dass durch diese hindurch Unkräuter wachsen können.

Eine gattungsgemäße Unkrautwachstumssperre ist aus der DE 38 23 580 A1 bekannt.

Die Aufgabe vorliegender Erfindung ist darin zu sehen, gattungsgemäße Unkrautwachstumssperren bereitzustellen, um eine sinnvolle Verbindung zwischen Pflanze und Wachstumssperre zu ermöglichen.

Die Aufgabe der Erfindung wird von einer Vorrichtung zum Verhindern eines Unkrautwachstums mit den Merkmalen des Patentanspruchs 1 gelöst.

Mittels der vorliegenden Vorrichtung ist baulich besonders einfach eine robuste Unkrautwachstumssperre geschaffen, mittels welcher das Wachstum einer Primärpflanze vor einem Nährstoffentzug durch Sekundärpflanzen geschützt ist.

Der Begriff "Primärpflanze" beschreibt vorliegend Pflanzen die gezielt heran gezogen werden. Beispielsweise handelt es sich hierbei um Containerpflanzen, die in Pflanzgefäßen, beispielsweise aus Kunststoff, gezüchtet und vermehrt werden.

Der Begriff "Sekundärpflanze" erfasst in diesem Zusammenhang alle "Nicht-Primärpflanzen", die dem Wachstum der Primärpflanze nicht förderlich sind. Dies sind beispielsweise Moose bzw. "Unkräuter".

Dadurch, dass das lichtundurchlässige Kunststoffmaterial eine flüssigkeitsdurchlässige Struktur aufweist, ist ein Erdreich um eine zu schützende Primärpflanze zum einen sehr gut von Licht abgeschirmt und zum anderen trotzdem problemlos mit Wasser erreichbar.

Auf Grund der flüssigkeitsdurchlässigen Struktur des Kunststoffmaterials ist es zudem nicht mehr erforderlich, in Kunststofffolien oder in sonstigen Kunststoffdeckeln oder Kunststoffabdeckungen zusätzliche Öffnungen einzubringen, um eine ausreichende Bewässerung der Primärpflanze zu gewährleisten. Zumal ist vorliegend mittels der flüssigkeitsdurchlässigen Kunststoffmaterialstruktur die Gefahr verhindert, dass durch zusätzliche Löcher in einem Kunststoffdeckel Licht dringt und hierdurch Sekundärpflanzen ein Wachstum ermöglicht wird.

Außerdem lässt sich die vorliegende Vorrichtung aus dem besagten Kunststoffmaterial hervorragend an mehreren Pflanzen wiederverwenden und ist somit nach einem Gebrauch wieder verwendbar.

Darüber hinaus ist es vorteilhaft, wenn das lichtundurchlässige Material flüssigkeitsresistent und/oder flüssigkeitsabweisend ist. Damit die vorliegende Vorrichtung sich selbst nicht oder nur vernachlässigbar mit Flüssigkeit voll saugt beziehungsweise sich auf Grund einer Flüssigkeit zersetzt, ist ein flüssigkeitsresistentes und/oder flüssigkeitsabweisendes Material besonders geeignet, die vorliegende Vorrichtung bereit zu stellen.

Eine hohe Lebensdauer des Grundkörpers ist vorliegend gewährleistet, wenn das lichtundurchlässige Material UV-Strahlen-resistent beziehungsweise UV-Strahlen-stabil ist.

Eine lange Einsatzdauer der Vorrichtung ist dann gewährleistet, wenn das lichtundurchlässige Material unverrottbar und/oder unkompostierbar ist. Eine lange Einsatzdauer wird vorteilhafter Weise auch bereits mit schwer verrottbaren Materialien erzielt.

Entsorgt werden kann die vorliegende Vorrichtung vorteilhaft, wenn das lichtundurchlässige Material brennbar ist. Hierdurch kann die vorliegende Vorrichtung auch als Energieträger verwendet werden. Sollte dies nicht vorgesehen sein, kann das lichtundurchlässige Material auch unbrennbar sein.

Es versteht sich, dass die Vorrichtung aus unterschiedlichen Kunststoffmaterialien beziehungsweise unterschiedlichen Kunststofffasern herstellbar ist, solange das Material lichtundurchlässig und von seiner Grundstruktur her flüssigkeitsdurchlässig ist. In der Praxis hat sich gezeigt, dass es vorteilhaft ist, wenn das Material Polyethylenfasern und/oder Polyesterfasern umfasst.

Eine Lichtundurchlässigkeit bei gleichzeitiger Flüssigkeitsdurchlässigkeit ist baulich besonders einfach vorliegend realisiert, wenn der Grundkörper aus einem Vlies hergestellt ist.

Die zuvor erwähnten vorteilhaften Eigenschaften werden auch hinsichtlich des Vlieses erzielt, wenn der Grundkörper aus einem Vlies aus Kunststoff, insbesondere aus Polyethylenfasern und/oder aus Polyesterfasern besteht.

Damit das Vlies einen Bereich um eine Primärpflanze lichtdicht abdecken kann, ist es vorteilhaft, wenn das Vlies lichtundurchlässig ist.

Ist das Vlies zusätzlich zumindest flüssigkeitsdurchlässig, kann die Primärpflanze ohne großen apparativen Aufwand und damit vorteilhaft bewässert werden.

Es versteht sich, dass das vorliegende Vlies, aus welchem der Grundkörper hergestellt ist, je nach Anwendungsfall unterschiedlich dick auszubilden ist. Für die meisten Anwendungszwecke hat es sich als vorteilhaft erwiesen, wenn das Vlies beispielweise eine Dicke zwischen 0,1 mm und 100 mm aufweist.

Um den Anforderungen an die Lichtundurchlässigkeit und die Flüssigkeitsdurchlässigkeit zu genügen, ist es vorteilhaft, wenn das Vlies zum Beispiel ein Flächengewicht zwischen 10 g/m² und 300 g/m² aufweist.

Das vorliegende Vlies ist besonders widerstandsfähig gegenüber mechanischen Belastungen, wenn das Vlies aus einem Faserverbund besteht, bei welchem die Fasern thermisch, chemisch und/oder mechanisch miteinander verbunden sind.

Kumulativ oder alternativ hierzu ist vorgesehen, dass das Vlies aus einem Faserverbund besteht, bei welchem die Fasern reibschlüssig und/oder formschlüssig miteinander verbunden sind.

In diesem Zusammenhang ist es vorteilhaft, wenn das Vlies aus einem Faserverbund besteht, bei welchem die Fasern miteinander vernadelt sind. Bei einem Vernadeln der einzelnen Fasern werden diese mechanisch innig untereinander verbunden.

Es versteht sich, dass der Grundkörper der vorliegenden Vorrichtung verschieden ausgebildet sein kann. So kann ein Grundkörper etwa rechteckig, quadratisch, dreieckig oder trapezförmig ausgebildet sein. Damit der Grundkörper relativ flach baut, ist es vorteilhaft, wenn der Grundkörper scheibenförmig ausgebildet ist.

Weist der Grundkörper zum Beispiel einen Durchmesser zwischen 20 mm und 1000 mm auf, kann er individuell an die meisten Anwendungserfordernisse angepasst werden.

Damit der Grundkörper einen runden Container besonders gut abdeckt, ist es vorteilhaft, wenn der Grundkörper rund ausgebildet ist.

Umfasst das lichtundurchlässige Kunststoffmaterial und/oder das Vlies Zusatzstoffe, kann die Funktion der vorliegenden Vorrichtung vorteilhaft weiterentwickelt werden.

Um einer Primärpflanze bereits mit dem Bewässern zusätzliche Mineral- und/oder Nährstoffe zuzuführen, kann es vorteilhaft sein, wenn das lichtundurchlässige Kunststoffmaterial und/oder das Vlies Mineral- und/oder Nährstoffe umfasst.

Um eine Primärpflanze vor einem Schädlingsbefall zu schützen, kann es vorteilhaft sein, wenn das lichtundurchlässige Kunststoffmaterial und/oder das Vlies chemische Pflanzenschutzmittel umfasst. Insbesondere können hier Fungizide, Herbizide beziehungsweise Pestizide vorteilhaft eingesetzt werden.

Eine weitere Ausführungsvariante kann vorsehen dass das lichtundurchlässige Kunststoffmaterial und/oder das Vlies Titanoxide umfasst. Titanoxide, wie beispielsweise Titandioxide und/oder Kohlenstoff, können vorteilhaft als Katalysator oder zur Stabilisierung des vorliegenden Grundkörpers eingesetzt werden.

Darüber hinaus kann eine nochmals verbesserte Schädlingsabwehr gewährleistet sein, wenn das lichtundurchlässige Kunststoffmaterial und/oder das Vlies Riechstoffe, Aromen und/oder fluoreszierende Stoffverbindungen umfasst.

Vorliegende Grundkörper können darüber hinaus als sichtbare Markierungen, die insbesondere im öffentlichen Verkehrsraum zur Erhöhung der Verkehrssicherheit führen, eingesetzt werden, wenn das lichtundurchlässige Kunststoffmaterial und/oder das Vlies reflektierende Stoffe umfasst.

Da die vorliegende Vorrichtung bereits mittels des hier beschriebenen Vlieses weiterentwickelt wird, sind die Merkmale hinsichtlich des Vlieses auch ohne die übrigen hier beschriebenen Merkmale vorteilhaft.

Die erfindungsgemäße Ausführungsvariante sieht vor, dass die Positioniermittel mittels linienförmig ausgebildeter Trennbereiche gebildet sind.

Der Begriff "Trennbereiche" beschreibt vorliegend Bereiche an dem Grundkörper, an welchen der Grundkörper ausgestanzt, an welchen Bereiche des Grundkörpers durchgestanzt oder an welchen Bereiche des Grundkörpers angestanzt sind.

Vorliegend umfasst der Begriff "Stanzen" auch Verfahren, mittels denen derartige Trennbereiche eingeschnitten, eingerissen oder auf chemischem Wege eingeätzt oder mittels anderen physikalischen Verfahren eingebracht sein können.

Beispielsweise handelt es sich bei dem vorliegenden Trennbereich um einen Solltrennbereich, wenn der Grundkörper an dieser Stelle lediglich angestanzt ist, so dass er sich entlang der Anstanzung bei leichtem Kraftaufwand, wie beispielsweise einem Knicken des Grundkörpers entlang des Solltrennbereichs, teilt. An bzw. mit der geteilten Stelle kann der Grundkörper vorteilhaft an einem Stängel einer Primärpflanze befestigt werden.

Der Begriff "linienförmig" beschreibt sowohl einen kurvig als auch einen geradlinig ausgebildeten Trennbereich.

Jedenfalls kann der Grundkörper der vorliegenden Vorrichtung mittels vorliegender, die Trennbereiche aufweisenden Positioniermittel einfach und schnell und damit vorteilhaft an einem Stamm beziehungsweise Stängel einer Primärpflanze befestigt werden.

In diesem Zusammenhang wird die Aufgabe der Erfindung auch von einem Verfahren zum Herstellen einer Unkrautwachstumssperre insbesondere an einer Pflanze gelöst, bei welchem in die Unkrautwachstumssperre Mittel zum Positionieren der Unkrautwachstumssperre eingebracht werden und bei welchem in einem Vlies aus Kunststofffasern Trennbereiche als Positioniermittel an-, eingestanzt, eingerissen oder angerissen werden, sodass ein linienförmig ausgebildeter Haupttrennbereich (5) mit linienförmig ausgebildeten Nebentrennbereichen (7) ein Fischgrätmuster in einem Grundkörper bildet.

Besonders vorteilhaft ist der vorliegende Grundkörper an einer Primärpflanze befestigbar, wenn ein linienförmig ausgebildeter Haupttrennbereich in einer Schnittstelle von wenigstens zwei linienförmig ausgebildeten Nebentrennbereichen mit unterschiedlichen Ausrichtungen strukturiert wird.

Vorliegend bezeichnet man einen Trennbereich als Haupttrennbereich, wenn er ausgehend von einem Umfangsrand des Grundkörpers in den Grundkörper hinein reicht.

Von einem Nebentrennbereich spricht man im vorliegenden Zusammenhang, wenn der Trennbereich nicht bis an den Umfangsrand des Grundkörpers reicht.

Es hat sich gezeigt, dass der Grundkörper der vorliegenden Vorrichtung einen sehr guten Halt, insbesondere auch bei Sturmbedingungen, an einer Primärpflanze hat und an dieser auch stabil verbleibt, wenn ein linienförmig ausgebildeter Haupttrennbereich mit linienförmig ausgebildeten Nebentrennbereichen ein Fischgrätmuster im Grundkörper bilden. Durch Anstanzungen beziehungsweise Einstanzungen oder durch andere Strukturierung eines Fischgrätmusters wird hinsichtlich der Positioniermittel ein Widerhakeneffekt erzielt, auf Grund dessen die vorliegende Vorrichtung besonders sicher an einer Primärpflanze dauerhaft befestigt werden kann.

Weiter vorteilhaft ist es, wenn der Haupttrennbereich eine Länge mit einem Wert aufweist, der mehr als die Hälfte des Grundkörperdurchmessers und weniger als drei Viertel des Grundkörperdurchmessers, vorzugsweise zwei Drittel des Grundkörperdurchmessers, beträgt.

Es versteht sich, dass die vorliegenden Positioniermittel in weiteren Mustern an den Grundkörper angebracht werden können. Vorteilhaft ist es, wenn zwei Nebentrennbereiche, welche den Haupttrennbereich in der gemeinsamen Schnittstelle schneiden, in einem Winkel von weniger als 180 Grad, vorzugsweise mit einem Winkel von 120 Grad, zueinander im Grundkörper angeordnet sind.

Darüber hinaus hat es sich als vorteilhaft erwiesen, wenn die Nebentrennbereiche eine Länge mit einem Wert aufweisen, der mehr als 5 % des Grundkörperdurchmessers und weniger als 15 % des Grundkörperdurchmessers beträgt. Hierdurch lassen sich ausreichend große Positionierbereiche an dem Grundkörper bilden.

Darüber hinaus ist es vorteilhaft, wenn zwei benachbarte Schnittstellen entlang des Haupttrennbereichs um einen Wert voneinander beabstandet angeordnet sind, der mehr als 5 % des Grundkörperdurchmessers und weniger als 15 % des Grundkörperdurchmessers beträgt. Hierdurch lassen sich die Dimensionen der Positioniermittel weiter vorteilhaft an die Pflanzengröße anpassen, die im direkten Verhältnis mit dem zu wählenden Grundkörperdurchmesser steht.

Darüber hinaus wird die Aufgabe der Erfindung von einer Verwendung eines Vliesmaterials für eine Unkrautwachstumssperre gelöst, bei welcher das Vliesmaterial aus Kunststoff besteht.

Vorteilhafter Weise besteht das Vliesmaterial aus Polyethylenfasern und/oder Polyesterfasern.

Weitere Vorteile, Ziele und Eigenschaften vorliegender Erfindung werden anhand anliegender Zeichnung erläutert, in welcher eine Unkrautwachstumssperre zum Anordnen an einer Primärpflanze dargestellt ist.

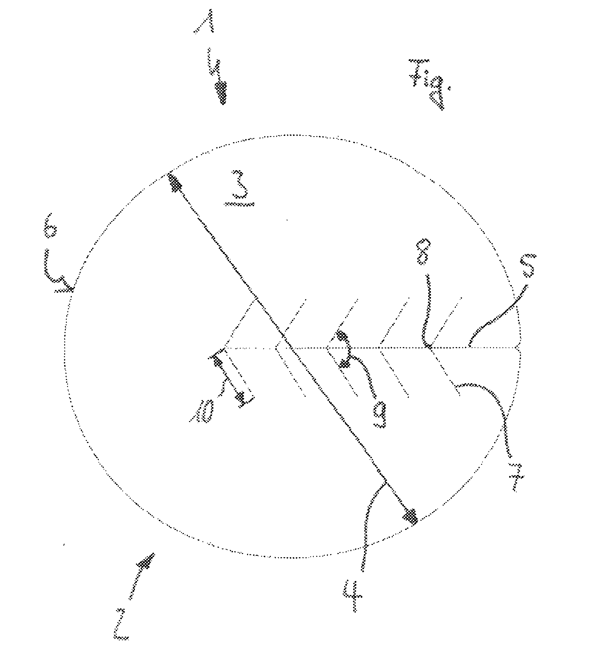

Es zeigt
- die einzige Figur: schematisch eine Ansicht einer Unkrautwachstums- sperre.

Die in der Figur gezeigte Unlcrautwachstumssperre 1 weist einen Grundkörper 2 aus einem Kunststoffvlies 3 auf. Das Kunststoffvlies 3 besteht aus einem Material, welches aus 100 % Polyesterfasern (hier einzeln nicht gezeigt) hergestellt ist. In einem anderen Ausführungsbeispiel kann das Material auch aus einer Mischung von Polyester- und Polyethylenfasern bestehen. Die Polyesterfasern sind hierbei mittels einer Vernadelungstechnik reib- und formschlüssig mehrfach miteinander verbunden. Durch das Vernadeln ist das Vlies mechanisch besonders vorteilhaft verfestigt. Darüber hinaus sind die Polyesterfasern thermisch miteinander verbunden, so dass zusätzlich eine kohäsive Bindung durch Verschweißen zwischen den einzelnen Polyesterfasern besteht.

In diesem Ausführungsbeispiel hat die Unkrautwachstumssperre 1 einen Durchmesser 4 von ca. 160 mm. Die Dicke der vorliegenden Unkrautwachstumssperre beträgt in diesem Ausführungsbeispiel in etwa 1 mm.

Damit die vorliegende Unkrautwachstumssperre 1 mit ihrem Grundkörper 2 vorteilhaft an eine Sekundärpflanze (hier nicht gezeigt) befestigt werden kann, ist in dem Grundkörper 2 eine gerade Hauptlinie 5 als ein Haupttrennbereich eingeschnitten. Diese Hauptlinie 5 erstreckt sich von dem Umfangsrand 6 des Grundkörpers 2 ausgehend bis über den Mittelpunkt des Grundkörpers hinaus um eine Länge in den Grundkörper 2 hinein, die etwa zwei Drittel des Grundkörperdurchmessers 4 beträgt.

Die Hauptlinie 5 wird von mehreren Nebenlinien 7 (hier nur beispielhaft beziffert) in gemeinsamen Schnittpunkten 8 (hier nur beispielhaft beziffert) geschnitten, so dass die Hauptlinie 5 und die Nebenlinien 7 ein Fischgrätmuster auf dem Grundkörper 2 ergeben.

Jeweils zwei sich in einem Schnittpunkt 8 treffende Nebenlinien weisen zueinander einen Winkel 9 von 120 Grad auf.

Jede der Nebenlinien 7 weist eine Länge 10 auf, die in diesem Ausführungsbeispiel 22 mm beträgt und die einzelnen Schnittpunkte 8 entlang der Hauptlinie sind in diesem Ausführungsbeispiel um 18 mm voneinander beabstandet angeordnet.

## Patentansprüche

1. Vorrichtung zum Verhindern eines Unkrautwachstums mit einem Grundkörper (2) aus einem lichtundurchlässigen Kunststoffmaterial und mit Mitteln zum Positionieren insbesondere an einer Pflanze, wobei das lichtundurchlässige Material eine flüssigkeitsdurchlässige Struktur aufweist, ***dadurch gekennzeichnet, dass*** die Positionierungsmittel mittels linienförmig ausgebildeter Trennbereiche (5, 7) gebildet sind wobei ein linienförmig ausgebildeter Haupttrennbereich (5) in einer Schnittstelle (8) von wenigstens zwei linienförmig ausgebildeten Nebentrennbereichen (7) mit unterschiedlichen Ausrichtungen geschnitten wird und der linienförmig ausgebildete Haupttrennbereich (5) mit linienförmig ausgebildeten Nebentrennbereichen (7) ein Fischgrätmuster im Grundkörper (2) bilden.

2. Vorrichtung nach Anspruch 1, ***dadurch gekennzeichnet, dass*** das lichtundurchlässige Material flüssigkeitsresistent und/oder flüssigkeitsabweisend ist.

3. Vorrichtung nach einem der Ansprüche 1 bis 2, ***dadurch gekennzeichnet, dass*** das lichtundurchlässige Material unverrottbar, schwer verrottbar und/oder unkompostierbar ist.

4. Vorrichtung nach einem der Ansprüche 1 bis 3, ***dadurch gekennzeichnet, dass*** der Grundkörper (2) aus einem Vlies (3) hergestellt ist.

5. Vorrichtung nach Anspruch 4, ***dadurch gekennzeichnet, dass*** das Vlies (3) lichtundurchlässig ist.

6. Vorrichtung nach einem der Ansprüche 4 bis 5, ***dadurch gekennzeichnet, dass*** das Vlies (3) eine Dicke zwischen 0,1 mm und 100 mm oder darüber hinaus aufweist.

7. Vorrichtung nach einem der Ansprüche 4 bis 6, ***dadurch gekennzeichnet, dass*** das Vlies (3) ein Flächengewicht von 300 g/m² oder mehr aufweist.

8. Vorrichtung nach einem der Ansprüche 4 bis 7, ***dadurch gekennzeichnet, dass*** das Vlies (3) aus Fasern besteht, bei welchen die Fasern miteinander vernadelt sind.

9. Vorrichtung nach einem der Ansprüche 1 bis 8, ***dadurch gekennzeichnet, dass*** der Grundkörper (2) einen Durchmesser zwischen 20 mm und 1000 mm oder mehr aufweist.

10. Vorrichtung nach einem der Ansprüche 1 bis 9, ***dadurch gekennzeichnet, dass*** die Nebentrennbereiche (7) eine Länge mit einem Wert aufweisen, der mehr als 5 % des Grundkörperdurchmessers (4) und weniger als 15 % des Grundkörperdurchmessers (4) beträgt.

11. Vorrichtung nach einem der Ansprüche 1 bis 10, ***dadurch gekennzeichnet, dass*** zwei benachbarte Schnittstellen (8) entlang des Haupttrennbereichs (5) um einen Wert voneinander beabstandet angeordnet sind, der mehr als 5 % des Grundkörperdurchmessers (4) und weniger als 15 % des Grundkörperdurchmessers (4) beträgt.

12. Vorrichtung nach einem der Ansprüche 1 bis 11, der Grundkörper (2) aus einem Vlies (3) aus Polyesterfasern hergestellt ist wobei das lichtundurchlässige Material UV-Strahlen-stabil ist.

13. Verfahren zum Herstellen einer Unkrautwachstumssperre (1), insbesondere an einer Pflanze, bei welchem in die Unkrautwachstumssperre (1) Mittel zum Positionieren der Unkrautwachstumssperre (1) eingebracht werden, ***dadurch gekennzeichnet, dass*** in einem Vlies (3) aus Kunststofffasern Trennbereiche (5, 7) als Positioniermittel eingestanzt und/oder Solltrennbereiche als Positioniermittel an-, eingestanzt, eingerissen oder angerissen werden, sodass ein linienförmig ausgebildeter Haupttrennbereich (5) mit linienförmig ausgebildeten Nebentrennbereichen (7) ein Fischgrätmuster in einem Grundkörper bildet.

## Claims

1. A device for preventing the growth of weed with a base body (2) made of an opaque plastic material and with means for positioning it, more specifically on a plant, the opaque material having a structure that is permeable to fluid, ***characterized in that*** the positioning means is formed by linearly configured cut areas (5, 7), a linearly configured main cut area (5) being crossed in a crossing point (8) by at least two linearly configured secondary cut areas (7) with different orientations and the linearly configured main cut area (5) with the linearly configured secondary cut areas (7) forming a herringbone pattern in the base body (2).

2. The device according to claim 1, ***characterized in that*** the opaque material is fluid resistant and/or fluid repellent.

3. The device according to one of the claims 1 to 2, ***characterized in that*** the opaque material is rotproof, difficultly decayable and/or non compostable.

4. The device according to one of the claims 1 to 3, ***characterized in that*** the base body (2) is manufactured from a nonwoven material (3).

5. The device according to claim 4, ***characterized in that*** the nonwoven material (3) is opaque.

6. The device according to one of the claims 4 to 5, ***characterized in that*** the nonwoven material (3) has a thickness of between 0,1 mm and 100 mm or above.

7. The device according to one of the claims 4 to 6, ***characterized in that*** the nonwoven material (3) has a surface weight of 300g/m² or more.

8. The device according to one of the claims 4 to 7, ***characterized in that*** the nonwoven material (3) consists of fibers, in which the fibers are needled together.

9. The device according to one of the claims 1 to 8, ***characterized in that*** the base body (2) has a diameter of between 20 mm and 1000 mm or more.

10. The device according to one of the claims 1 to 9, ***characterized in that*** the secondary cut areas (7) have a length, the value of which is more than 5% of the base body diameter (4) and less than 15% of the base body diameter (4).

11. The device according to one of the claims 1 to 10, ***characterized in that*** two adjacent crossing points (8) are disposed along the main cut area (5) at a distance from each other which is more than 5% of the base body diameter (4) and less than 15% of the base body diameter (4).

12. The device according to one of the claims 1 to 11, ***characterized in that*** the base body (2) is manufactured from a nonwoven material (3) made of polyester fibers, the opaque material being UV-stable.

13. A method for manufacturing a weed growth barrier (1), more specifically on a plant, whereby means for positioning the weed growth barrier (1) are inserted into the weed growth barrier (1), ***characterized in that*** cut areas (5, 7) are punched as positioning means into a nonwoven material (3) made of plastic fibers and/or theoretical cut areas are punched, torn or marked as positioning means, so that a linearly configured main cut area (5) with linearly configured secondary cut areas (7) form a herringbone pattern in a base body.

## Revendications

1. Dispositif pour empêcher la croissance de mauvaises herbes avec un corps de base (2) en une matière plastique opaque et avec des moyens de positionnement, notamment sur une plante, le matériau opaque comportant une structure perméable aux liquides, ***caractérisé en ce que*** les moyens de positionnement sont formés au moyen de zones de sectionnement configurées linéairement (5, 7), une zone de sectionnement principale configurée linéairement (5) étant coupée en un point d'intersection (8) par au moins deux zones de sectionnement secondaires configurées linéairement (7) orientées différemment, et la zone de sectionnement principale configurée linéairement (5) formant avec les zones de sectionnement secondaires configurées linéairement (7) un motif en forme d'arête de poisson dans le corps de base (2).

2. Dispositif selon la revendication 1, ***caractérisé en ce que*** le matériau opaque est résistant aux liquides et/ou repousse les liquides.

3. Dispositif selon l'une quelconque des revendications 1 à 2, ***caractérisé en ce que*** le matériau opaque est imputrescible, difficilement putrescible et/ou non biodégradable.

4. Dispositif selon l'une quelconque des revendications 1 à 3, ***caractérisé en ce que*** le corps de base (2) est manufacturé dans un matériau non-tissé (3).

5. Dispositif selon la revendication 4, ***caractérisé en ce que*** le matériau non-tissé est opaque.

6. Dispositif selon l'une quelconque des revendications 4 à 5, ***caractérisé en ce que*** le matériau non-tissé (3) comporte une épaisseur entre 0,1 mm et 1000 mm ou plus.

7. Dispositif selon l'une quelconque des revendications 4 à 6, ***caractérisé en ce que*** le matériau non-tissé (3) comporte un poids surfacique de 300 g/m2 ou plus.

8. Dispositif selon l'une quelconque des revendications 4 à 7, ***caractérisé en ce que*** le matériau non-tissé (3) est composé de fibres, où les fibres sont aiguilletées.

9. Dispositif selon l'une quelconque des revendications 1 à 8, ***caractérisé en ce que*** le corps de base (2) comporte un diamètre entre 20 mm et 1000 mm.

10. Dispositif selon l'une quelconque des revendications 1 à 9, ***caractérisé en ce que*** les zones de sectionnement secondaires (7) ont une longueur dont la valeur est supérieure à 5% du diamètre du corps de base (4) et inférieure à 15% du corps de base (4).

11. Dispositif selon l'une quelconque des revendications 1 à 10, ***caractérisé en ce que*** deux points d'intersection (8) adjacents sont disposés le long de la zone de sectionnement principale (5) à une distance supérieure à 5% du diamètre du corps de base (4) et inférieure à 15% du corps de base (4).

12. Dispositif selon l'une quelconque des revendications 1 à 11, ***caractérisé en ce que*** le corps de base (2) est composé d'un matériau non-tissé (3) en fibres de polyester, le matériau opaque étant résistant aux UV.

13. Méthode pour la fabrication d'un inhibiteur de croissance des mauvaises herbes (1), notamment pour une plante, dans lequel des moyens de positionnement de l'inhibiteur de croissance des mauvaises herbes (1) sont insérés dans l'inhibiteur de croissance des mauvaises herbes (1), ***caractérisé en ce que*** des zones de sectionnement (5, 7) sont découpées en tant que moyen de positionnement dans un matériau non-tissé (3) en fibres plastiques et/ou des zones de sectionnement potentielles sont découpées, déchirées ou tracées en tant que moyen de positionnement, de sorte que une zone de sectionnement principale configurée linéairement (5) avec des zones de sectionnement secondaires configurées linéairement (7) forme un motif en forme d'arête de poisson dans un corps de base.
